(19) Europäisches Patentamt / European Patent Office / Office européen des brevets

(11) **EP 3 202 741 B1**

(12) **FASCICULE DE BREVET EUROPEEN**

(45) Date de publication et mention de la délivrance du brevet:
**05.12.2018 Bulletin 2018/49**

(51) Int Cl.:
*C04B 7/32* *(2006.01)*     *C04B 28/06* *(2006.01)*
*B09C 1/08* *(2006.01)*     *B09B 3/00* *(2006.01)*
*C04B 7/00* *(2006.01)*     *C04B 111/00* *(2006.01)*

(21) Numéro de dépôt: **17159769.3**

(22) Date de dépôt: **13.05.2013**

(54) **NOUVEAU LIANT HYDRAULIQUE À BASE DE CLINKER SULFO-ALUMINEUX ET SON UTILISATION DANS UN PROCÉDÉ DE TRAITEMENT DE SOLS POLLUES**

NEUARTIGES HYDRAULISCHES BINDEMITTEL AUS BASIS VON SULFOALUMINATKLINKER UND DESSEN VERWENDUNG IN EINEM VERFAHREN ZUR BEHANDLUNG VON VERUNREINIGTEM ERDREICH

NOVEL HYDRAULIC BINDER BASED ON SULFOALUMINATE CLINKER AND ITS USE IN A PROCESS FOR TREATMENT OF POLLUTED SOILS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2012 FR 1254395**

(43) Date de publication de la demande:
**09.08.2017 Bulletin 2017/32**

(62) Numéro(s) de document de la (des) demande(s) initiale(s) en application de l'article 76 CBE:
**13727283.7 / 2 850 037**

(73) Titulaire: **Ciments Français**
**92800 Puteaux (FR)**

(72) Inventeurs:
• **MOUDILOU, Emmanuel**
  **27640 BREUILPONT (FR)**
• **GUERANDEL, Cyril**
  **92110 CLICHY (FR)**
• **LE ROLLAND, Bruno**
  **78250 OINVILLE SUR MONTCIENT (FR)**
• **DELAIR, Stéphanie**
  **78300 POISSY (FR)**

(74) Mandataire: **Le Cloirec, Claudine**
**Ipsilon**
**3, rue Edouard Nignon**
**44300 Nantes (FR)**

(56) Documents cités:
| | |
|---|---|
| **EP-A1- 1 306 356** | **EP-A1- 1 384 704** |
| **EP-A2- 0 353 062** | **EP-A2- 0 439 372** |
| **EP-A2- 1 775 270** | **WO-A1-2010/043495** |
| **FR-A1- 2 807 424** | **FR-A1- 2 841 897** |
| **FR-A1- 2 868 772** | **FR-A1- 2 901 270** |
| **GB-A- 1 345 586** | **GB-A- 2 175 295** |

• **Holcim: "Inercem", , 31 December 2009 (2009-12-31), XP055486673, Retrieved from the Internet: URL:www.holcim.be/dorofix [retrieved on 2018-06-21]**

**Description**

La présente invention concerne un nouveau liant hydraulique sulfo-alumineux, et son utilisation dans le cadre du traitement de sols pollués.

La présente invention a pour objet un liant hydraulique contenant des phases minéralogiques le plaçant dans la catégorie des liants sulfo-alumineux. La présente invention a également pour objet l'utilisation de ce liant pour le traitement d'un matériau, notamment d'un sol ou d'une terre, polluée ou contaminée par des espèces chimiques ioniques ou des métaux lourds. Le matériau traité reste meuble mais la lixiviation des espèces polluantes est réduite.

La mise en décharge de sols contaminés par des agents polluants, notamment des sols provenant de sites industriels, obéit à une règlementation stricte (Directive 1999/31/CE du Conseil du 26 avril 1999 et Décision n° 2003/33/CE du 19/12/02). Les modalités de mise en décharge de ces sols sont déterminées selon leurs classes de pollution. Ces classes vont de la classe I (déchets dangereux) à la classe III (déchets inertes). Plus un sol est considéré comme dangereux, plus sa mise en décharge entraine des contraintes et en conséquence un coût élevé. Afin de pouvoir stocker en décharge ces sols contaminés, au moindre coût, il convient d'en abaisser la classe de dangerosité. Cette modification de la classe de dangerosité peut en particulier être obtenue en abaissant le taux d'agents polluants lixiviables contenus dans le sol.

Abaisser la classe de dangerosité peut également permettre de réemployer les sols ainsi traités, par exemple dans des sous couches routières ou dans des remblais (en accord avec le guide SETRA "Acceptabilité de matériaux alternatifs en technique routière. Evaluation environnementale." Mars 2011).

Dans le langage cimentier, les composés primaires sont représentés par C pour CaO, S pour $SiO_2$, A pour $Al_2O_3$, \$ pour $SO_3$, H pour $H_2O$, qui seront utilisés dans l'ensemble du présent texte.

Des liants hydrauliques sont déjà utilisés pour le traitement d'effluents industriels (déchets liquides) et de résidus d'incinération sous une forme finement divisée, notamment pour piéger certains anions.

C'est le cas notamment des liants hydrauliques commercialisés par la société Kerneos sous le nom commercial LSR et décrits dans le brevet européen EP 0 588 689 qui sont des ciments alumineux. Les phases minéralogiques majoritaires de ces ciments alumineux sont CA ou CA et $C_{12}A_7$ ou $C_3A$ et $C_{12}A_7$.

Les déchets finement divisés sont d'abord traités avec un liant alumineux contenant trois phases majoritaires $C_3A$, $C_{12}A_7$ et CaO. Le produit traité ainsi obtenu est ensuite concassé et les granulats sont enrobés dans un ciment de type Portland pour améliorer leur résistance à la lixiviation. Ce procédé nécessite donc une quantité importante de liant d'enrobage.

En outre le brevet divulgue la teneur finale en chlorures du lixiviat après 28 jours de durcissement, mais ne donne aucune information sur la teneur en ions sulfate. Deux types de liants alumineux sont décrits comprenant les phases respectives $C_3A/C_{12}A_7$/CaO en proportions 20/80/0 et 80/0/20. Aucune référence n'est faite à une phase $C_4A_3$\$.

WO2010/043495 traite le problème de l'immobilisation des polluants et divulgue un liant hydraulique à base de clinker sulfo-alumineux, ledit clinker comprenant les phases minéralogiques 40 - 80 % Yeelimite C4 A3 \$ et 15 - 25 % Bélite C2 S, mais pas des phases minéralogiques Mayenite C12 A7 ni de chaux libre CaO. Ce liant est utilisé dans une région portuaire, où beaucoup de polluants se rassemblent dans l'argile marine; ces polluants sont immobilisés.

On connait également des liants destinés notamment à l'inertage et au traitement de sols pollués commercialisés par la société Holcim sous le nom commercial Inercem. Ces liants sont des mélanges de clinker (Portland) et de laitier de haut fourneau. Les différents produits sont : Inercem P (plus de 65 % de clinker et moins de 20% de laitier), Inercem S (plus de 80% de laitier et plus de 10 % de clinker), et Inercem à mi chemin entre les deux produits précédents (moins de 30 % de clinker et plus de 60 % de laitier). Ces produits sont décrits dans la brochure commerciale : « Inercem Liants hydrauliques pour stabilisation des déchets courants », (Holcim Belgique, février 2009).

Il apparait que ces liants ne sont pas suffisamment efficaces pour piéger les ions sulfate lorsque le sol à traiter est pollué par de tels anions facilement lixiviables qui sont relargués dans les eaux de pluie ou d'infiltration.

Un premier but de l'invention est donc de proposer un liant hydraulique apte à piéger les anions tels que les ions sulfate et les ions chlorure et/ou les métaux lourds présents dans des matériaux contaminés, notamment des sols pollués, et limiter leur lixiviation.

Un autre but de l'invention est de proposer un liant hydraulique permettant le traitement et l'inertage d'un sol pollué en une seule étape et *in situ*, c'est-à-dire ne nécessitant pas le transfert sur un autre lieu.

Encore un but de l'invention est de proposer un liant hydraulique permettant le traitement et l'inertage d'un sol pollué avant sa mise en décharge.

Un autre but de l'invention est donc de proposer un liant hydraulique apte à traiter le sol pollué par addition de liant en quantité faible, permettant de diminuer le coût du traitement par rapport aux liants et aux procédés de mise en oeuvre de l'art antérieur.

A cet effet, la présente invention propose un nouveau liant hydraulique à base de clinker sulfo-alumineux, ledit clinker comprenant les phases minéralogiques Yeelimite $C_4A_3$\$, Mayenite $C_{12}A_7$, de la chaux libre CaO et de la Bélite $C_2S$, la Yeelimite ne représentant pas plus de 50% de la masse du clinker, et le rapport massique entre les phases Mayenite $C_{12}A_7$ et Yeelimite $C_4A_3$\$ étant compris entre 0,1 et 10.

La présente invention propose un nouveau liant hydraulique à base de clinker sulfo-alumineux, ledit clinker comprenant les phases minéralogiques Yeelimite $C_4A_3\$$, Mayenite $C_{12}A_7$, de la chaux libre CaO et de la Bélite $C_2S$, caractérisé en ce que dans ledit clinker les phases minéralogiques Yeelimite $C_4A_3\$$, Mayenite $C_{12}A_7$, la chaux libre et la bélite sont présentes dans les proportions suivantes :

- de 20% à 50% massique de phase Yeelimite $C_4A_3\$$,
- de 5% à 80% massique de phase Mayenite $C_{12}A_7$, de 1 à 5% massique de chaux libre CaO,
- et de 10 % à 40 % massique de phase bélite $C_2S$,

le rapport massique entre les phases Mayenite $C_{12}A_7$ et Yeelimite $C_4A_3\$$ étant compris entre 0,1 et 10, et le clinker comprenant en outre une phase $CaO.SO_3$ (C$) jusqu'à 5 % massique.

Comme nous le verrons plus loin, ce liant hydraulique qui renferme un clinker sulfo-alumineux (et non un clinker alumineux comme les produits LSR) est apte à être utilisé pour la stabilisation des sols pollués, afin de créer des espèces chimiques stables, notamment de l'ettringite, mais également de la stratlingite, de l'hydrocalumite, au sein des dits sols. L'utilisation de ce liant peut ainsi permettre de traiter *in situ* un sol contaminé et de le faire changer de classe d'admission en décharge.

Par clinker sulfo-alumineux il faut comprendre un clinker qui renferme au minimum 20 % de phase minéralogique $C_4A_3\$$.

Il est à noter que la phase minéralogique $C_{12}A_7$ est une phase que l'on retrouve habituellement dans les liants alumineux. Dans le cadre des liants sulfo-alumineux, la phase $C_{12}A_7$ est considérée par l'homme de l'art comme un intermédiaire de cuisson, indiquant que les conditions de cuisson du cru ne sont pas optimales. Le produit principal que cherche à obtenir l'homme de l'art pour les clinkers sulfo-alumineux est la phase minéralogique $C_4A_3\$$, et non pas la phase $C_{12}A_7$. Le liant hydraulique selon la présente invention est un produit qui serait considéré en temps normal comme "imparfait" par l'homme du métier.

Dans le cadre de la présente invention la phase $C_{12}A_7$ englobe toute structure isotype de $C_{12}A_7$, comme par exemple $C_{11}A_7$. $CaF_2$ dont la structure résulte d'une substitution d'ions $O^{2-}$ par des ions $F^-$. Dans la suite de la description et des revendications, par $C_{12}A_7$, il faut comprendre $C_{12}A_7$ ou toute structure isotype.

Les principales phases minéralogiques actives de ce clinker sulfo-alumineux sont la yeelimite $C_4A_3\$$, la mayenite $C_{12}A_7$ et la chaux CaO. La bélite, aussi présente, contribue à la résistance mécanique du matériau traité avec ce liant et participe à la dépollution du matériau (sol traité) par la stabilisation chimique des produits d'hydratation des composés sulfo-alumineux.

De préférence le liant hydraulique renferme un clinker sulfo-alumineux qui comprend de 5% à 50% massique de phase Mayenite $C_{12}A_7$.

Il s'avère que les propriétés "dépolluantes" du liant hydraulique selon la présente invention sont encore améliorées lorsque dans le clinker le rapport massique entre les phases Mayenite $C_{12}A_7$ et Yeelimite $C_4A_3\$$ est compris entre 0,1 et 2,5, de préférence entre 0,15 et 1,5.

De préférence le liant hydraulique est à base de clinker sulfo-alumineux qui renferme moins de 0,5% massique de phase $CA_2$ et moins de 0,5% massique de phase $C_2AS$.

De préférence le liant hydraulique est à base de clinker sulfo-alumineux qui renferme plus de 10% massique de Mayenite $C_{12}A_7$.

De manière triviale, le clinker sulfo-alumineux selon la présente invention peut être obtenu par cuisson de minéraux dans un four de cimenterie ; mais il peut également être obtenu par mélange de différentes sources de clinker, voir même par ajout de phases minéralogiques pures à un clinker sulfoalumineux industriel afin de l'enrichir en phases minéralogiques, notamment en Yeelimite et en Mayenite.

Le liant hydraulique selon la présente invention s'est révélé particulièrement efficace lorsqu'il est constitué exclusivement du clinker sulfo-alumimeux tel que décrit précédemment.

Il est également efficace pour traiter des sols pollués lorsqu'il renferme au moins 10%, notamment au moins 20%, de préférence au moins 30%, massique dudit clinker sulfo-alumineux, et un ou plusieurs composé(s) choisi(s) parmi du ciment, du clinker Portland, de la chaux, notamment de la chaux vive, un filler (composé inerte chimiquement) des additions à effet pouzzolanique (ayant un rôle dans le développement des résistances à long terme) telles que du laitier, de la cendre volante, de la fumée de silice, de la pouzzolane, et éventuellement un ou plusieurs adjuvants tels qu'un accélérateur de prise et/ou un réducteur de chrome.

Avantageusement le liant hydraulique renferme de la chaux vive, notamment moins de 50%, de préférence de 5 à 30 %, encore préférentiellement de 10 à 20 % massique de chaux.

Avantageusement le liant hydraulique ne renferme pas de fibres, notamment des fibres métalliques.

Préférentiellement le liant selon la présente invention renferme moins de 30% massique, de préférence moins de 10% massique, encore de préférence moins de 5% massique, de clinker Portland.

Avantageusement le liant hydraulique renferme plus de 2%, de préférence plus de 5%, encore préférentiellement plus de 10% massique de Yeelimite.

Avantageusement le liant hydraulique renferme plus de 2%, de préférence plus de 5%, encore préférentiellement plus de 10% massique de Mayenite.

La présente invention concerne également un procédé de traitement de sols pollués, notamment de sols présentant une fraction lixiviable supérieure à 0,4%, la dite fraction lixiviable renfermant majoritairement des anions, notamment des ions sulfates, et/ou des cations de métaux lourds, le procédé étant caractérisé en ce qu'il comprend le mélange du dit sol avec un liant hydraulique tel que décrit ci-dessus, dans des proportions massiques sol/liant comprises entre 1 et 40 parties de liant pour 100 parties de sol.

De préférence, le procédé de traitement comprend le mélange du dit sol avec le liant hydraulique, dans des proportions massiques sol/liant comprises entre 1 et 20 parties, de préférence de 2 à 20 parties, de préférence encore de 5 à 20 parties, de préférence encore de 5 à 10 parties de liant pour 100 parties de sol.

Le sol ainsi traité reste facilement manipulable (pelletable, transportable). Il n'est pas nécessaire de lui adjoindre une étape complémentaire d'enrobage pour limiter le relarguage des anions tels que les chlorures ou sulfates.

De préférence, le procédé de traitement est adapté au traitement de sol renfermant une tenue en eau inférieure à 40%, notamment inférieure à 30%, préférentiellement inférieure à 20% massique d'eau.

Le procédé de la présente invention trouve une utilisation intéressante pour la stabilisation de sols pollués *in situ* ou avant mise en décharge, sols pollués notamment par des ions sulfate et/ou des ions chlorure et/ou des cations de métaux lourds.

Le matériau ainsi traité peut ensuite être réemployé dans des sous-couches routières ou dans des remblais.

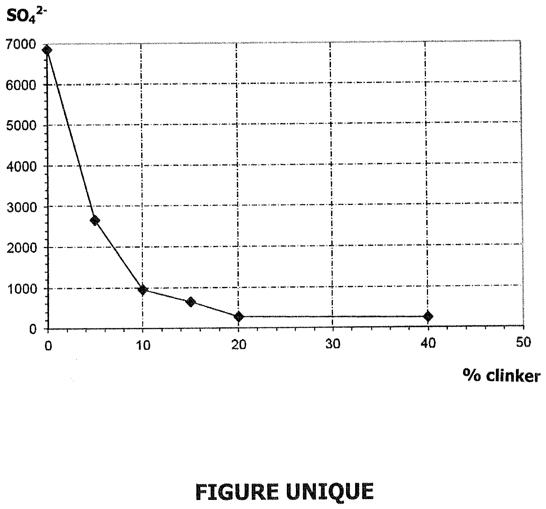

La présente invention va être décrite plus en détail dans les exemples de réalisation non limitatifs ci-après en relation avec la figure unique annexée qui schématise la variation de la teneur en ions sulfate dans le lixiviat en fonction du pourcentage massique en liant hydraulique.

## EXEMPLES

## 1- Préparation des clinkers

Les clinkers, selon la présente invention, sont préparés par cuisson à haute température d'un cru composé notamment de calcaire, gypse, argile et bauxite qui sont des mélanges de différentes oxydes, notamment $CaO$, $SiO_2$, $Al_2O_3$, $Fe_2O_3$ et $SO3$. L'art de composer ce cru est bien connu de l'homme du métier (Special Inorganic Cement, Ivan Older, 2000, E&FN Spon, New York).

Il est important de noter que dans le cadre de la présente invention, les matières premières constituant le cru (mélange des minéraux avant cuisson) sont dosées pour obtenir un liant hydraulique sulfo-alumineux et non pas un liant hydraulique alumineux.

Les proportions globales de ces différents oxydes sont déterminées à partir de trois modules pilotant la saturation en chaux (Cm), la distribution des sulfates (Ps) et le caractère alumineux (N).

Le module Cm doit être proche de 1.

Le module Ps doit être inférieur à 3,82.

Le module N doit être inférieur à 2.

Dans le cas présent, la synthèse du clinker est effectuée par voie semi-humide.

Le cru est malaxé avec de l'eau (environ 10% en masse) pour obtenir une pâte modelable, puis est mis manuellement sous forme de "boudins" de longueur et de diamètre de l'ordre de 25 cm et 3 cm respectivement. Le cru ainsi mis en forme est conservé à 110°C pendant 12 heures environ.

Le cru est ensuite cuit dans un four à moufle à 1300°C pendant 1 heure environ, pour obtenir le clinker. Le clinker est refroidi à l'air ambiant, puis broyé pour obtenir une finesse Blaine de environ 4000 $cm^2$/g et une granulométrie inférieure à 40 micromètres environ. Les compositions minéralogiques de trois clinkers sulfo-alumineux selon l'invention sont présentées dans le Tableau 1 (en % massique).

**Tableau 1**

|  | Clinker 1 | Clinker 2 | Clinker 3 |
|---|---|---|---|
| $C_4A_3\$$ | 31,6 | 24,4 | 26,3 |
| C2S | 29 | 22,4 | 24,1 |
| C\$ | 3,1 | 2,4 | 2,6 |
| $C_{12}A_7$ | 9,8 | 30,7 | 25 |
| $C_4AF$ | 11 | 8,5 | 9,2 |

(suite)

|  | Clinker 1 | Clinker 2 | Clinker 3 |
|---|---|---|---|
| CT | 2,3 | 1,8 | 1,9 |
| MgO | 1,7 | 1,4 | 1,4 |
| C | 1,2 | 0,9 | 1 |
| CaCO3 | 3 | 2,3 | 2,5 |

## 2- Procédé de traitement

Le procédé de traitement d'un matériau contaminé (tel qu'un sol pollué), par un liant hydraulique sulfo-alumineux à base de clinker sulfo-alumineux selon l'invention a été mis en oeuvre selon les étapes suivantes :
Une quantité de terre brute est tamisée à 4 mm (Tamis Saulas, France, certifié NF ISO 3310) de manière à obtenir 1 kg de terre à traiter (matériau contaminé).
1 kg de terre tamisée à traiter (matériau contaminé) est placé dans un malaxeur (MLX40D, CAD France) en présence d'une quantité de liant hydraulique sulfo-alumineux déterminée, exprimée en % massique de liant par rapport à la masse de matériau contaminé.
Le mélange terre/liant subit alors une étape d'homogénéisation par mélange à vitesse faible (140 tours/minute) pendant 1 minute. Puis l'eau est ajoutée selon un rapport massique eau/ liant égal à 1.
L'ensemble est alors mélangé à vitesse lente pendant 2 minutes puis 2 minutes à vitesse rapide (285 tours/minute). L'ensemble du contenu du malaxeur est alors déversé dans un sac plastique (sac en Polyethylène, 3 litres) puis fermé hermétiquement de manière à simuler un stockage en tas. La maturation de la terre traitée est réalisée sur une durée de 1 semaine à température ambiante.
Le matériau traité est ensuite séché à 40°C à l'étuve puis éventuellement concassé (BB 200 Wolframcarbid, RETSCH Allemagne) à une granulométrie < 4 mm pour réaliser les essais de lixiviation.

## 3- Procédé de Lixiviation

Conformément à la Directive précitée qui définit les classes de dangerosités, la norme NF EN-12457-2 a été utilisée.
Les essais sont effectués sur un matériau dont au moins 95% des particules (en masse) ont une taille inférieure au tamis de 4 mm.
Un échantillon de 350 g de matériau brut est tamisé au tamis de 4 mm. Le refus à 4 mm est soumis à un concassage pour obtenir un refus nul à ce tamis, et l'ensemble est mélangé pour obtenir l'échantillon qui va être soumis au test de lixiviation.
Pour les analyses et les tests de lixiviation, la masse de matière sèche ($m_s$) de l'échantillon est déterminée après passage à l'étuve à 105°C ±5°C jusqu'à poids constant conformément à la norme ISO 11465.

## Test de Lixiviation

La prise d'essai de départ $m_{lixi}$ est de 90 g ± 0,5 g (mesurée avec une précision de 0,1 g) de matière sèche.
L'essai de lixiviation est réalisé à température ambiante soit 20°C ± 5°C, dans un flacon d'un litre en présence d'une quantité de lixiviant (eau désionisée, 18 MΩ) équivalente à un rapport massique liquide-solide (L/S) de 10 ± 2%. Le flacon bouché est placé dans un dispositif d'agitation à retournement tournant (*Heidolph REAX 20*) à environ 10 tr/min et agité pendant 24 heures ± 0,5 h.
En plus des échantillons, des "blancs" de lixiviation sont également effectués.
Après arrêt de l'agitation, les solides en suspension sont laissés décanter pendant 15 min ± 5min, puis filtrés sous vide sur un filtre à membrane de 0,45 μm.
L'éluât est ensuite divisé en un nombre approprié de sous échantillons pour les différentes analyses chimiques et conservé selon la norme EN ISO 5667-3.
L'analyse des éléments (métaux lourds) est réalisée par analyse ICP-AES (Spectrométrie d'émission atomique couplée à un plasma induit) (*Iris advantage, Thermo Jarrell Ash*), selon un protocole conforme à la norme NF EN ISO 11885.
L'analyse des anions est réalisée par chromatographie ionique (ICS 2000 Dionex, USA) selon un mode opératoire conforme à la norme NF EN ISO 10304-1.
La fraction soluble (FS) est calculée selon l'équation suivante :

$$Fs = \frac{\left[ (m_1 - m_0)(0,9 + (0,001 \cdot m_{lixi} \cdot t_{humidité}))\right]}{(0,001 \cdot V_{ext} \cdot m_{lixi} \cdot (1 - t_{humidité}))}$$

$m_1 - m_0 = m_s$ = Masse de l'échantillon séché à l'étuve à 105°C (en gramme)
$m_{lixi}$ = Masse de la prise d'essai pour lixiviation (en gramme)
$t_{humidité}$ = Taux d'humidité de l'échantillon (en gramme)
$V_{ext}$ = Volume prélevé pour mesure de l'extrait sec (en millilitre)

Dans la suite du document FS est exprimée en %. Dans les directives précitées FS est exprimée en mg/kg. La valeur de 1 % équivaut à 10 000 mg/kg.

## Echantillons de référence

Tous les essais réalisés ici ont été effectués à partir de terre du Port autonome de Paris, terre excavée d'un ancien site industriel où était en activité une usine d'incinération à Issy-les-Moulineaux près de Paris.
La terre du port de Paris constitue un sol pollué, appelé encore matériau contaminé au sens de la présente invention, le substrat étant la terre, et les agents polluants étant les différents éléments ou ions présents en quantités importantes dans cette terre.

## Echantillon 1

L'échantillon 1 est un échantillon brut de terre du port autonome de Paris. Cet échantillon 1 n'a pas subi de lixiviation. Il renferme une teneur en eau d'environ 15% massique.

## Echantillon 2

L'échantillon 2 correspond à l'analyse d'un lixiviat de terre du port de Paris.
Les dosages des différents agents polluants présents dans l'échantillon 1 brut et sur le lixiviat (échantillon 2) sont regroupés dans le tableau 2.
Les valeurs des éléments et ions dosés sont exprimées en mg/kg de matière sèche.
La fraction soluble représente la quantité totale d'éléments chimiques passant en solution par rapport à la quantité de matériau sec initial, exprimé en % de matière sèche.

**Tableau 2**

|  | Echantillon 1 | Echantillon 2 |
|---|---|---|
| As | 53 | <0,2 |
| Ba | 769 | 0,471 |
| Cd | 5 | 0,114 |
| Cu | 798 | 0,253 |
| Hg | <3 | <0,1 |
| Ni | 107 | 0,127 |
| Pb | 1454 | 0,115 |
| Sb | 47 | <0,2 |
| Se | <5 | <0,2 |
| Zn | 1163 | 0,375 |
| $Cl^-$ | 68,7 | 68,7 |
| $SO_4^{2-}$ | 9400 | 6 859 |
| FS (Fraction soluble) | - | 1,18 |

Les résultats de ce tableau 2 montrent que les principaux éléments lixiviables, et donc constituant des agents polluants sont les anions, notamment les sulfates et les chlorures. Les teneurs en sulfates lixiviés ont pour conséquence de faire passer la terre en classe II selon la Directive 1999/31/CE du Conseil du 26 avril 1999 pour sa mise en décharge. La valeur de la fraction soluble FS comprise entre 0,4 % et 6 % induit également un classement en catégorie II.

L'échantillon 2 est sélectionné comme référence pour mesurer l'efficacité des différents liants, dans les exemples ci-après.

**Exemple 1 (comparatif)**

**Echantillon 3**

L'échantillon 3 correspond au traitement d'un échantillon de terre du port de Paris avec 10% (en masse) d'un liant commercialisé par la société Holcim sous le nom commercial Inercem. La quantité d'eau utilisée dans la réalisation de cet échantillon correspond à un rapport Eau / Liant égal à 1.

**Exemple 2**

**Echantillon 4**

L'échantillon 4 correspond au traitement d'un échantillon de terre du port de Paris avec 10% (en masse) d'un liant hydraulique sulfo-alumineux constitué du clinker 1 (100% de clinker 1). La quantité d'eau utilisée dans la réalisation de cet échantillon correspond à un rapport Eau / Liant égal à 1.

**Exemple 3**

**Echantillon 5**

L'échantillon 5 correspond au traitement d'un échantillon de terre du port de Paris avec 10% (en masse) d'un liant hydraulique sulfo-alumineux constitué d'un clinker 2 (100% de clinker 2). La quantité d'eau utilisée dans la réalisation de cet échantillon correspond à un rapport Eau / Liant égal à 1.

Les résultats des tests de lixiviation réalisés sur les échantillons 3, 4 et 5, comparés à l'échantillon 2 de référence, sont regroupés dans le tableau 3.

**Tableau 3**

| | Echantillon 2 (référence) | Echantillon 3 (comparatif) | Echantillon 4 (clinker 1) | Echantillon 5 (clinker 2) |
|---|---|---|---|---|
| As | <0,2 | <0,3 | <0,3 | <0,2 |
| Ba | 0,471 | 0,425 | 0,865 | 1,45 |
| Cd | 0,114 | <0,1 | <0,1 | <0,1 |
| Cu | 0,253 | <0.2 | 0,221 | 0,2 |
| Hg | <0,1 | <0,1 | <0,1 | <0,001 |
| Ni | 0,127 | <0,1 | <0,1 | <0,1 |
| Pb | 0,115 | <0,35 | <0,35 | <0,1 |
| Sb | <0,2 | <0,5 | <0,5 | <0,2 |
| Se | <0,2 | <0,4 | <0,4 | <0,2 |
| Zn | 0,375 | <0,2 | <0,2 | <0,1 |
| Cl- | 68,7 | 59 | 56 | 28 |
| $SO_4^{2-}$ | 6 859 | 8968 | 1082 | 951 |
| FS % | 1,18 | 1,32 | 0,52 | 0,57 |

On observe que l'utilisation d'Inercem ne permet pas de diminuer la fraction soluble de la terre, contrairement aux liants hydrauliques sulfo-alumineux selon l'invention.

Plus particulièrement, le traitement avec le liant Inercem ne permet pas d'abaisser la quantité de sulfates entrainés (relargués) dans le lixiviat, contrairement aux traitements avec le liant hydraulique sulfo-alumineux selon l'invention pour lequel la teneur en ions sulfate est divisé d'un facteur 7 environ. Le liant à base de clinker 2 permet en outre d'abaisser la quantité de sulfates entrainés (relargués) sous le seuil de 1000 ppm imposé par la directive (Directive 1999/31/CE du Conseil du 26 avril 1999) pour le déclassement des déchets de catégorie II en catégorie III.

## Exemple 4

**Comparaison de l'efficacité des trois compositions de liant hydraulique**

### Echantillon 6

L'échantillon 6 correspond au traitement d'un échantillon de terre du port de Paris avec 20% (en masse) d'un liant hydraulique sulfo-alumineux constitué du clinker 1 (100% de clinker 1).

### Echantillon 7

L'échantillon 7 correspond au traitement d'un échantillon de terre du port de Paris avec 20% (en masse) d'un liant hydraulique sulfo-alumineux constitué du clinker 2 (100% de clinker 2).

### Echantillon 8

L'échantillon 8 correspond au traitement d'un échantillon de terre du port de Paris avec 20% (en masse) d'un liant hydraulique sulfo-alumineux constitué du clinker 3 (100% de clinker 3).

Pour ces trois échantillons 6,7 et 8, la quantité d'eau utilisée correspond à un rapport Eau/Liant égale à 1.

Les résultats des tests de lixiviation des trois échantillons de terre traités par le procédé selon l'invention sont regroupés dans le tableau 4.

**Tableau 4**

| | | Echantillon 2 (référence) | Echantillon 6 (20% clinker 1) | Echantillon 7 (20% clinker 2) | Echantillon 8 (20% clinker 3) |
|---|---|---|---|---|---|
| As | | <0,2 | <0,3 | <0,2 | <0,2 |
| Ba | | 0,471 | 0,594 | 1,428 | 1,157 |
| Cd | | 0,114 | <0,1 | <0,1 | <0,1 |
| Cu | | 0,253 | 0,396 | <0,2 | <0,2 |
| Hg | | <0,1 | <0,001 | <0,001 | <0,001 |
| Ni | | 0,127 | <0,1 | <0,1 | <0,1 |
| Pb | | 0,115 | <0,350 | <0,350 | <0,350 |
| Sb | | <0,2 | <0,5 | <0,5 | <0,5 |
| Se | | <0,2 | <0,4 | <0,4 | <0,2 |
| Zn | | 0,375 | <0,2 | <0,2 | <0,2 |
| Cl- | | 68,7 | 36 | 33 | 38 |
| $SO_4^{2-}$ | | 6 859 | 817 | 267 | 468 |
| FS % | | 1,18 | 0,62 | 0,92 | 0,81 |

On remarque que le traitement avec une forte proportion de liant permet dans chaque cas d'abaisser la quantité de sulfates entrainés (relargués) bien au-dessous du seuil de 1000 ppm imposé par la directive (Directive 1999/31/CE du Conseil du 26 avril 1999) pour le déclassement des déchets.

La teneur en chlorures est divisée par deux dans le lixiviat des sols traités à 20% du liant à base de clinker sulfo-alumineux selon l'invention.

### Exemple 5

Traitement à base de clinker 1 avec différentes proportions de liant

Le tableau 5 regroupe les valeurs présentées dans les tableaux 3 et 4, concernant le liant hydraulique sulfo-alumineux constitué de clinker 1, comparant l'efficacité des traitements du matériau contaminé avec des proportions en liant différentes.

**Tableau 5**

|  | Echantillon 2 (référence) | Echantillon 4 (10% liant) | Echantillon 6 (20% liant) |
|---|---|---|---|
| As | <0,2 | <0,3 | <0,3 |
| Ba | 0,471 | 0,865 | 0,594 |
| Cd | 0,114 | <0,1 | <0,1 |
| Cu | 0,253 | 0,221 | 0,396 |
| Hg | <0,1 | <0,1 | <0,001 |
| Ni | 0,127 | <0,1 | <0,1 |
| Pb | 0,115 | <0,35 | <0,350 |
| Sb | <0,2 | <0,5 | <0,5 |
| Se | <0,2 | <0,4 | <0,4 |
| Zn | 0,375 | <0,2 | <0,2 |
| $Cl^-$ | 68,7 | 56 | 36 |
| $SO_4^{2-}$ | 6 859 | 1082 | 817 |
| FS | 1,18 | 0,52 | 0,62 |

On observe que la stabilisation des chlorures et des sulfates est fonction de la quantité de liant utilisé.

### Exemple 6

### Traitement avec différentes proportions de liant à base de clinker 2

Les échantillons 9, 10 et 11 correspondent au traitement d'un échantillon de terre du port de Paris respectivement avec 5%, 15% et 40% (en masse) d'un liant hydraulique sulfo-alumineux constitué exclusivement de clinker 2. La quantité d'eau utilisée dans la réalisation de ces échantillons correspond à un rapport Eau / Liant égal à 1.

Le tableau 6 regroupe les résultats de ces trois derniers échantillons ainsi que les échantillons 5 et 7 précédents réalisés avec des proportions en liants respectivement de 10% et 20% massique par rapport au matériau contaminé.

**Tableau 6**

| % liant | Echantillon 9 (5%) | Echantillon 5 (10%) | Echantillon 10 (15%) | Echantillon 7 (20%) | Echantillon 11 (40%) |
|---|---|---|---|---|---|
| As | <0,2 | <0,2 | <0,2 | <0,2 | <0,2 |
| Ba | 1,4 | 1,45 | 1,445 | 1,428 | 1,146 |
| Cd | <0,1 | <0,1 | <0,1 | <0,1 | <0,1 |
| Cu | <0,2 | 0,2 | <0,2 | <0,2 | <0,2 |
| Hg | <0,001 | <0,001 | <0,001 | <0,001 | <0,001 |
| Ni | <0,1 | <0,1 | <0,1 | <0,1 | <0,1 |
| Pb | <0,1 | <0,1 | <0,1 | <0,350 | 0,178 |
| Sb | <0,2 | <0,2 | <0,2 | <0,5 | <0,2 |

(suite)

| % liant | Echantillon 9 (5%) | Echantillon 5 (10%) | Echantillon 10 (15%) | Echantillon 7 (20%) | Echantillon 11 (40%) |
|---|---|---|---|---|---|
| Se | <0,2 | <0,2 | <0,2 | <0,4 | <0,2 |
| Zn | <0,1 | <0,1 | <0,1 | <0,2 | <0,1 |
| Cl⁻ | 44 | 28 | 26 | 33 | 25 |
| $SO_4^{2-}$ | 2 662 | 951 | 640 | 267 | 238 |
| FS | 0,68 | 0,57 | 0,68 | 0,92 | 0,77 |

On observe également avec ce liant que la stabilisation des sulfates de la terre est fonction de la quantité de liant hydraulique sulfo-alumineux utilisé. L'évolution des concentrations des sulfates dans les lixiviats des terres traitées montre que l'efficacité de la stabilisation augmente de manière importante avec la quantité de liant hydraulique sulfo-alumineux utilisé pour le traitement. Au-delà de 10%, la stabilisation des sulfates s'améliore également mais avec une évolution plus faible.

Ces résultats sont schématisés sur la figure annexée. Le graphique représente la variation de teneur en ions sulfates exprimée en ppm (ou mg/kg de matériau traité) dans le lixiviat (représenté sur l'axe des ordonnées), en fonction du pourcentage massique de liant hydraulique à base de clinker 2 utilisé pour traiter le sol contaminé (représenté sur l'axe des abscisses).

## Exemple 7

Un nouveau prélèvement de terre du port de Paris a été effectué dans une autre zone de ce terrain pollué et divisé en plusieurs fractions.

Une première fraction (échantillon 12) brute a subi une lixiviation dans les mêmes conditions que précédemment, et constitue la référence pour cet exemple 7.

Une seconde fraction (échantillon 13) a été traitée par 10% de liant hydraulique selon l'invention renfermant 70% de clinker 2 et 30% de ciment Portland blanc de type CEM I 52,5 N, puis soumis à une lixiviation.

Les résultats des analyses réalisées sur ces deux lixiviats sont présentés dans le tableau 7.

Ces résultats montrent que même à 70% de clinker selon l'invention dans le liant hydraulique, la teneur en sulfates dans le lixiviat est divisée par 6, et la teneur en chlorures divisée par 2.

### Tableau 7

| | Echantillon 12 (référence) | Echantillon 13 (10% liant) |
|---|---|---|
| As | <0,2 | <0,2 |
| Ba | 0,39 | 0,52 |
| Cd | <0,1 | <0,1 |
| Cu | 0,21 | 0,51 |
| Hg | <0,1 | <0,1 |
| Ni | <0,1 | <0,1 |
| Pb | <0,1 | <0,1 |
| Sb | 0,22 | <0,2 |
| Se | <0,2 | <0,2 |
| Zn | 0,33 | <0,2 |
| Cl⁻ | 62 | 27 |
| $SO_4^{2-}$ | 10 274 | 1 547 |
| FS | 1,35 | 0,55 |

L'ensemble des résultats de ces essais démontre clairement que le nouveau clinker est apte, mélangé en faible concentration (notamment inférieure à 15 % massique) à un matériau pollué, en particulier par des ions sulfate et chlorure, à réduire considérablement leur teneur dans le lixiviat, contribuant ainsi à l'inertage de ce matériau, sans nécessiter son enrobage.

**Revendications**

1. Liant hydraulique à base de clinker sulfo-alumineux, ledit clinker comprenant les phases minéralogiques Yeelimite $C_4A_3\$$, Mayenite $C_{12}A_7$, de la chaux libre CaO et de la Bélite $C_2S$, **caractérisé en ce que** dans ledit clinker les phases minéralogiques Yeelimite $C_4A_3\$$, Mayenite $C_{12}A_7$, la chaux libre et la bélite sont présentes dans les proportions suivantes :

   - de 20% à 50% massique de phase Yeelimite $C_4A_3\$$,
   - de 5% à 80% massique de phase Mayenite $C_{12}A_7$,
   - de 1 à 5% massique de chaux libre CaO,
   - et de 10 % à 40 % massique de phase bélite $C_2S$,

   le rapport massique entre les phases Mayenite $C_{12}A_7$ et Yeelimite $C_4A_3\$$ étant compris entre 0,1 et 10, et le clinker comprenant en outre une phase $CaO.SO_3$ (C\$) jusqu'à 5 % massique.

2. Liant selon la revendication 1, **caractérisé en ce que** le clinker comprend de 5 à 50% de phase Mayenite $C_{12}A_7$.

3. Liant selon la revendication 1 ou 2, **caractérisé en ce que** dans le clinker le rapport massique entre les phases Mayenite $C_{12}A_7$ et Yeelimite $C_4A_3\$$ est compris entre 0,1 et 2,5.

4. Liant selon la revendication 1, **caractérisé en ce que** dans le clinker le rapport massique entre les phases Mayenite $C_{12}A_7$ et Yeelimite $C_4A_3\$$ est compris de préférence entre 0,15 et 1,5.

5. Liant selon l'une quelconque des revendications précédentes, **caractérisé en ce que** le clinker renferme moins de 0,5% massique de phase $CaO.2Al_2O_3$ ($CA_2$) et moins de 0,5% massique de phase $2CaO.Al_2O_3.SO_3$ ($C_2AS$).

6. Liant selon l'une quelconque des revendications précédentes, **caractérisé en ce qu'**il renferme au moins 20%, de préférence au moins 30%, massique de clinker sulfo-alumineux, et un ou plusieurs composé(s) choisi(s) parmi du ciment, du clinker Portland, de la chaux, notamment de la chaux vive, un filler, des additions à effet pouzzolanique telles que du laitier, de la cendre volante, de la fumée de silice, de la pouzzolane, et éventuellement un ou plusieurs adjuvants tels qu'un accélérateur de prise et/ou un réducteur de chrome.

7. Liant selon la revendication 6, **caractérisé en ce que** ledit liant hydraulique renferme de la chaux vive, notamment moins de 50% massique de chaux.

8. Procédé de traitement de sols pollués, notamment de sols présentant une fraction lixiviable supérieure à 0,4%, ladite fraction lixiviable renfermant majoritairement des anions, notamment des ions sulfates, et/ou des cations de métaux lourds, **caractérisé en ce que** ledit procédé comprend le mélange du dit sol avec un liant hydraulique selon l'une quelconque des revendications précédentes, dans des proportions massiques sol/liant comprises entre 1 et 40 parties de liant pour 100 parties de sol.

9. Procédé de traitement selon la revendication 8, **caractérisé en ce qu'**il comprend le mélange du dit sol avec le liant hydraulique, dans des proportions massiques sol/liant comprises entre 1 et 20 parties, de préférence de 2 à 20 parties, de préférence encore de 5 à 20 parties de liant pour 100 parties de sol.

10. Utilisation du procédé selon l'une quelconque des revendications 8 ou 9 pour la stabilisation de sols pollués *in situ* ou avant mise en décharge, sols pollués notamment par des ions sulfate et/ou des ions chlorure et/ou des cations de métaux lourds.

11. Utilisation du procédé selon la revendication 10 pour la stabilisation de sols renfermant une teneur en eau inférieure à 40% massique, de préférence inférieure à 30% massique.

**12.** Utilisation du sol traité selon l'une quelconque des revendications 8 ou 9 dans des sous-couches routières ou des remblais.

**Patentansprüche**

**1.** Hydraulisches Bindemittel auf der Basis von Sulfoaluminatklinker, wobei der Klinker die mineralischen Phasen Yeelimit $C_4A_3\$$, Mayenit $C_{12}A_7$, freien Kalk CaO und Belit $C_2S$ umfasst,
**dadurch gekennzeichnet, dass** in dem Klinker die mineralischen Phasen Yeelimit $C_4A_3\$$, Mayenit $C_{12}A_7$, der freie Kalk und das Belit in den folgenden Anteilen vorhanden sind:

- 20 bis 50 Ma% Yeelimit-Phase $C_4A_3\$$,
- 5 bis 80 Ma% Mayenit-Phase $C_{12}A_7$,
- 1 bis 5 Ma% freier Kalk CaO,
- und 10 bis 40 Ma% Belit-Phase $C_2S$,

wobei das Massenverhältnis zwischen den Phasen Mayenit $C_{12}A_7$ und Yeelimit $C_4A_3\$$ zwischen 0,1 und 10 inklusive ist und der Klinker ferner eine Phase $CaO.SO_3$ (C$) bis 5 Ma% umfasst.

**2.** Bindemittel nach Anspruch 1, **dadurch gekennzeichnet, dass** der Klinker 5 bis 50 Ma% Mayenit-Phase $C_{12}A_7$ umfasst.

**3.** Bindemittel nach Anspruch 1 oder 2, **dadurch gekennzeichnet, dass** in dem Klinker das Massenverhältnis zwischen den Phasen Mayenit $C_{12}A_7$ und Yeelimit $C_4A_3\$$ zwischen 0,1 und 2,5 inklusive ist.

**4.** Bindemittel nach Anspruch 1, **dadurch gekennzeichnet, dass** in dem Klinker das Massenverhältnis zwischen den Phasen Mayenit $C_{12}A_7$ und Yeelimit $C_4A_3\$$ vorzugsweise zwischen 0,15 und 1,5 inklusive ist.

**5.** Bindemittel nach einem der vorangehenden Ansprüche, **dadurch gekennzeichnet, dass** der Klinker unter 0,5 Ma% Phase $CaO.2Al_2O_3$ ($CA_2$) und unter 0,5 Ma% Phase $2CaO.Al_2O_3.SO_3$ ($C_2AS$) einschließt.

**6.** Bindemittel nach einem der vorangehenden Ansprüche, **dadurch gekennzeichnet, dass** es mindestens 20 Ma%, vorzugsweise mindestens 30 Ma%, Sulfoaluminatklinker und einen oder mehrere Bestandteil(e) einschließt, ausgewählt aus Zement, Portland-Klinker, Kalk, insbesondere Branntkalk, einem Filler, Additiven mit Puzzolanwirkung wie Schlacke, Flugasche, Quarzstaub, Puzzolan, und eventuell einem oder mehreren Hilfsstoffen wie ein Abbinde-Beschleuniger und/oder ein Chromreduzierer.

**7.** Bindemittel nach Anspruch 6,
**dadurch gekennzeichnet, dass** das hydraulische Bindemittel Branntkalk, insbesondere unter 50 Ma% Kalk, einschließt.

**8.** Verfahren zur Behandlung von verunreinigten Böden, insbesondere von Böden, die eine herauslösbare Fraktion von über 0,4 % aufweisen, wobei die herauslösbare Fraktion mehrheitlich Anionen einschließt, insbesondere Sulfationen und/oder Kationen von Schwermetallen,
**dadurch gekennzeichnet, dass** das Verfahren ein Gemisch des Bodens mit einem hydraulischen Bindemittel nach einem der vorangehenden Ansprüche in Massenanteilen Boden/Bindemittel zwischen 1 und 40 Anteilen inklusive Bindemittel auf 100 Bodenteile umfasst.

**9.** Behandlungsverfahren nach Anspruch 8, **dadurch gekennzeichnet, dass** es das Mischen des Bodens mit dem hydraulischen Bindemittel in Massenanteilen Boden/Bindemittel zwischen 1 und 20 Anteilen inklusive, vorzugsweise von 2 bis 20 Anteilen, noch vorzugsweiser von 5 bis 20 Anteilen Bindemittel, auf 100 Bodenanteile umfasst.

**10.** Anwendung des Verfahrens nach einem der Ansprüche 8 oder 9 für die Stabilisierung von verunreinigten Böden *in situ* oder vor der Deponierung, wobei die Böden insbesondere durch Sulfationen und/oder Chloridionen und/oder Kationen von Schwermetallen verunreinigt sind.

**11.** Anwendung des Verfahrens nach Anspruch 10 für die Stabilisierung von Böden, die einen Gehalt an Wasser unter 40 Ma%, vorzugsweise unter 30 Ma%, einschließen.

**12.** Verwendung des behandelten Bodens nach einem der Ansprüche 8 oder 9 in Straßenunterschichten oder Schüttungen.

**Claims**

**1.** Hydraulic binder based on sulfo-aluminous clinker, wherein the clinker comprises Yeelimite $C_4A_3\$$, Mayenite $C_{12}A_7$, free lime CaO and belite $C_2S$ mineralogical phases,
**characterized in that** Yeelimite $C_4A_3\$$, Mayenite $C_{12}A_7$, free lime and belite mineralogical phases are present in the following proportions in the clinker:

- from 20% to 50% by weight of Yeelimite $C_4A_3\$$ phase,
- from 5% to 80% by weight of Mayenite $C_{12}A_7$ phase,
- from 1 to 5% by weight of free lime CaO phase, and
- from 10% to 40% by weight of belite $C_2S$ phase,

wherein the weight ratio between the Mayenite $C_{12}A_7$ and Yeelimite $C_4A_3\$$ phases is between 0.1 and 10, and wherein the clinker further comprises a $CaO.SO_3$ (C$) phase up to 5% by weight.

**2.** Binder according to claim 1, **characterized in that** the clinker comprises from 5 to 50% of Mayenite $C_{12}A_7$ phase.

**3.** Binder according to claim 1 or 2, **characterized in that** the weight ratio between the Mayenite $C_{12}A_7$ and Yeelimite $C_4A_3\$$ phases in the clinker, is between 0.1 and 2.5.

**4.** Binder according to claim 1, **characterized in that** the weight ratio between the Mayenite $C_{12}A_7$ and Yeelimite $C_4A_3\$$ phases in the clinker is preferably between 0.15 and 1.5.

**5.** Binder according to any one of the preceding claims, **characterized in that** the clinker contains less than 0.5% by weight of $CaO.2Al_2O_3$ ($CA_2$) phase and less than 0.5 % by weight of $2CaO.Al_2O_3 \, SO_3$ ($C_2AS$) phase.

**6.** Binder according to any one of the preceding claims, **characterized in that** it contains at least 20% by weight, preferably at least 30% by weight of sulpho-aluminous clinker, and one or more compounds chosen from cement, Portland clinker, lime, especially quicklime, filler, additions with a pozzolanic effect such as slag, fly ash, silica fume, pozzolan, and possibly one or more adjuvants such as a setting accelerator and/or a chromium reducer.

**7.** Binder according to claim 6, **characterized in that** the hydraulic binder contains quicklime, especially less than 50% by weight of lime.

**8.** Method for treating polluted soils, in particular soils having a leachable fraction greater than 0.4%, wherein the leachable fraction predominantly contains anions, in particular sulphate ions, and/or heavy metal cations, **characterized in that** the method comprises the mixing of the soil with a hydraulic binder according to any one of the preceding claims, in soil/binder weight ratios of between 1 and 40 parts of binder per 100 parts of soil.

**9.** Treatment method according to claim 8, **characterized in that** it comprises the mixing of the soil with the hydraulic binder in soil/binder weight ratios of between 1 and 20 parts, preferably between 2 to 20 parts, more preferably between 5 to 20 parts of binder per 100 parts of soil.

**10.** Use of the method according to any one of the claims 8 or 9 for the stabilization of polluted soils *in situ* or before landfill, in particular soils polluted by sulphate ions and/or chloride ions and/or heavy metal cations.

**11.** Use of the method according to claim 10 for the stabilization of soils with a water content of less than 40% by weight, preferably less than 30% by weight.

**12.** Use of the treated soil according to any one of the claims 8 or 9 in road sublayers or backfill.

**FIGURE UNIQUE**

**EP 3 202 741 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0588689 A
- WO 2010043495 A

**Littérature non-brevet citée dans la description**

- **IVAN OLDER.** Special Inorganic Cement. E&FN Spon, 2000